(19) Europäisches Patentamt
European Patent Office
Office européen des brevets

(11) Publication number : **0 470 841 A2**

(12) **EUROPEAN PATENT APPLICATION**

(21) Application number : **91307285.6**

(51) Int. Cl.$^5$ : **C02F 1/76**

(22) Date of filing : **08.08.91**

(30) Priority : **10.08.90 JP 213281/90**
**29.03.91 JP 91140/90**

(43) Date of publication of application :
**12.02.92 Bulletin 92/07**

(84) Designated Contracting States :
**DE IT**

(71) Applicant : **OMCO CO. LTD.**
**10-7, Tsurugamai 3-chome Ooimachi**
**Iruma-gun Saitama-ken (JP)**
Applicant : **NIPPON STEEL CORPORATION**
**6-3 Otemachi 2-chome Chiyoda-ku**
**Tokyo 100-71 (JP)**

(72) Inventor : **Okazaki, Tatsuo**
**7-18, Nishi 2-chome**
**Kamifukuoka-shi, Saitama-ken (JP)**
Inventor : **Sasaki, Yoshihiro, c/o Kamaishi Works**
**Nippon Steel Corporation, 23-15, Suzukocho**
**Kamaishi-shi, Iwate-ken (JP)**
Inventor : **Kitamura, Hideyuki, c/o Kamaishi Works**
**Nippon Steel Corporation, 23-15, Suzukocho**
**Kamaishi-shi, Iwate-ken (JP)**
Inventor : **Oshima, Katsue, c/o Nippon Steel Corporation**
**6-3, Otemachi 2-chome, Chiyoda-ku**
**Tokyo (JP)**

(74) Representative : **Gaunt, Robert John**
**Stevens, Hewlett & Perkins 1 Serjeants' Inn**
**Fleet Street**
**London EC4Y 1LL (GB)**

(54) **Method of and apparatus for producing sterilized water.**

(57) A method of producing a sterilized water which comprises mixing sodium chloride-added water and a hydrogen chloride-added water, electrolyzing the mixture in an electrolytic cell with no diaphragm and diluting the resultant electrolyzed water with water. Preferably, the pH value is adjusted to a range of 3 to 7 and the residual chlorine concentration is adjusted to a range of 1.0 to 200 ppm. The apparatus used for the method comprises an electrolytic cell with no diaphragm, an introduction pipe for supplying a raw water, an aqueous sodium chloride solution and an aqueous hydrogen chloride solution to the electrolytic cell, an exit pipe disposed for recovering the electrolyzed water from the electrolytic cell and a diluting means for mixing the electrolyzed water with the raw water. The electrolytic cell preferably has, a water pass block integrally joined thereto, in which an electrolyzed water and the raw water are mixed.

EP 0 470 841 A2

## BACKGROUND OF THE INVENTION

### (Field of the Invention)

The present invention concerns a novel method of electrolytically producing a sterilized water containing hypochlorous acid, as well as an apparatus for practicing such a method.

### (Description of the Prior Art)

An aqueous solution of hypochlorous acid forms hypochlorite ions ($ClO^-$) in a pH region of higher than 8 and its sterilizing effect is remarkably reduced as compared with that of hypochlorous acid (HClO).

However, it has been known that it is kept in the form of HClO in a pH range from 3 to 7 to outstandingly increase the sterilizing effect (refer to Fig. 4). Accordingly, in the pH range from 3 to 7, an aqueous solution of hypochlorous acid at a concentration of residual chlorine as low as about 30 to 60 ppm can provide a sterilizing effect comparable with that of sterilized water at a residual chlorine concentration of about 200 ppm at pH 8. In view of the above, as a method of obtaining sterilized water of this kind, it has been attempted to electrolyze an aqueous solution of sodium chloride to form an aqueous hypochlorous acid in a pH region of 3 to 7 in the side of an anode chamber as described below.

That is, the method of producing a sterilized water comprises supplying water to be electrolyzed comprising a mixture of an aqueous solution of sodium chloride and a raw water supplied from a raw water introduction pipe to an electrolytic cell having an anode chamber and a cathode chamber partitioned by a diaphragm, electrolyzing the mixed water, and then mixing and diluting the thus formed electrolyzed water recovered from the anode chamber with a raw water supplied from a diluting raw water conduit branched from the midway of the raw water introduction pipe and/or electrolyzed water recovered from the cathode chamber. An apparatus for practicing this method of producing a sterilized water comprises, as shown in Fig. 3, a DC power source for electrolysis, an electrolytic cell having a diaphragm between both of an anode and a cathode and separated into an anode chamber and a cathode chamber, an introduction pipe for supplying water to be electrolyzed comprising a mixture of a raw water supplied from a raw water introduction pipe and an aqueous solution of sodium chloride supplied from an aqueous sodium chloride addition means into the anode chamber and the cathode chamber respectively, exit pipes for recovering processed water from the anode chamber and the cathode chamber respectively, and means for mixing and diluting the processed water recovered from the anode chamber, the raw water supplied from the diluting raw water conduit branched from the raw water introduction pipe and/or processed water recovered from the cathode chamber.

By the means for diluting the electrolyzed water with the raw water, it is possible to dilute the electrolyzed water at a high residual chlorine concentration formed on the side of the anode to a predetermined concentration, control the pH value, as well as increase the volume of the sterilized water to several times as great as that of the processed water formed on the side of the anode.

Means for diluting by using the processed water formed on the side of the cathode is disposed mainly for controlling the pH value.

The present inventor invented a method and a apparatus for producing the sterilized water as described above and filed the same on November 20 1988 as Japanese Patent Application No. Sho 63-300998.

The method proposed by the above-mentioned patent application can provide various advantages in that the method is excellent in view of the safety and operability since it can produce a sterilized water by a simple operation and can supply a water continuously by a required amount at a place it is used, as well as in that controlling/monitoring operations such as for various flowrate control, electric current control and so on are no more necessary to save man-power, by disposing an automatic control circuit for the residual chlorine concentration and the pH value of the sterilized water. However, when the apparatus was actually operated continuously, it brought about a problem that calcium deposited on the cathode, to increase the electrolyzing voltage (refer to Fig. 5) or make the flow of the electrolyzing current difficult and increase the water flow resistance, thereby reducing the amount of water, and continuous operation was no more possible.

## OBJECT OF THE INVENTION

It is, accordingly, a first object of the present invention to provide a method of producing a sterilized water containing hypochlorous acid with no deposition of calcium on a cathode.

A second object of the present invention is to provide a method of producing a sterilized water at a good yield by enabling to utilize an electrolyzed water in a cathode chamber as a sterilized water which has been discarded so far to a drain

A third object of the present invention is to provide an apparatus suitable to practicing of the foregoing method.

SUMMARY OF THE INVENTION

The foregoing three objects can be attained by the method and the apparatus described below.

That is, a method of producing a sterilized water according to the present invention comprises:

supplying a water to be electrolyzed comprising a mixture of an aqueous solution of sodium chloride and a raw water supplied from a raw water introduction pipe to an electrolytic cell and electrolyzing the same, then

mixing and diluting the processed water recovered from the electrolytic cell with a raw water supplied from a diluting raw water conduit branched at a midway of the raw water introduction pipe.

An apparatus for producing a sterilized water according to the present invention comprises:

a DC power source for electrolysis,

an electrolytic cell with no diaphragm having an anode and a cathode but not having a diaphragm between both of the electrodes;

an introduction pipe for supplying a water to be electrolyzed comprising a mixture of an aqueous solution of sodium chloride supplied from an aqueous sodium chloride addition means and an aqueous solution of hydrogen chloride supplied from an aqueous hydrogen chloride addition means into the electrolytic cell,

exit pipes for recovering processed water from the electrolytic cell, and

means for mixing and diluting the processed water recovered from the electrolytic cell with a raw water supplied from a diluting raw water conduit branched from the raw water introduction pipe.

When the means for diluting with the raw water is disposed, it is possible to dilute the processed water at a high residual chlorine concentration formed in the electrolytic cell to a predetermined concentration, control the pH value, and increase the volume of the sterilized water by from several to ten and several times the volume of the electrolytically processed water.

The means for adding hydrogen chloride (HCl) is disposed for preventing calcium from depositing to the cathode and for controlling the pH value.

In the apparatus according to the present invention, a sterilized water can be produced by applying diaphragmless electrolysis to an aqueous solution of sodium chloride, in which reactions are taken place in the electrolytic cell are as described below.

Water which is to be electrolyzed is electrolyzed by a DC current. On the side of the anode, chlorine ions form hypochlorous acid through the reactions shown below, while sodium ions are brought into reaction with water to form sodium hydroxide and gaseous hydrogen on the side of the cathode. The reaction renders the periphery of the anode acidic and the periphery of the cathode alkaline.

(Anode) :

$$2Cl^- \rightarrow Cl_2 + 2e^-$$

$$Cl_2 + H_2O \rightarrow H^+ + Cl^- + HClO$$

(Cathode) :

$$2Na^+ + 2H_2O + 2e^- \rightarrow 2NaOH + H_2\uparrow$$

The ratio of hypochlorous acid (HClO) present in water varies depending on a pH value as described above.

The residual chlorine concentration and the pH value in the processed (electrolyzed) water formed on the side of the anode vary depending on the amount of water to be electrolyzed and the electrolyzing current (hereinafter referred to as: "OX ratio current"), in which the residual chlorine concentration is increased and the pH value is lowered as the OX ratio current is increased, whereas the residual chlorine concentration is reduced and the pH value approaches a neutral level as the OX ratio current is decreased.

By the way, since there is no diaphragm that partitions the anode and the cathode, the pH value in the entire electrolytic cell is scarcely changed.

For adjusting the pH value to a predetermined level, (acidic), hydrogen chloride (HCl) is added to neutralize NaOH formed on the cathode to render the entire solution acidic by the following reaction:

$$NaOH + HCl \rightarrow NaCl + H_2O \text{ (solution)}$$

The pH value can be adjusted by the amount of HCl added.

Water at a high residual chlorine concentration formed by electrolysis is mixed and diluted by being joined with a diluting raw water branched at the raw water branching portion, controlled for the residual chlorine concentration and the pH value each within a predetermined range and then discharged from the apparatus as a sterilized water.

Description will now be made to the effect of calcium (Ca) deposited on the cathode.

Ca leaches mainly in the form of calcium bicarbonate in the raw water. If it is electrolyzed, calcium carbonate is deposited and grown on the surface of the cathode by the following reaction to increase the electrolysis resistance thus making the flow of the electrolyzing current difficult and continuous electrolysis is impossible.
(Cathode)

$$Ca(HCO_3)_2 \rightarrow CaCO_3\downarrow + 2H_2O + CO_2\uparrow$$

When HCl is added, $CaCO_3$ is dissolved in the form of $CaCl_2$ in the solution:
(Cathode)

$$CaCO_3\downarrow + 2HCl \rightarrow CaCl_2 + H_2CO_3$$

and the problem of calcium deposition can be dissolved.

## DESCRIPTION OF THE ACCOMPANYING DRAWINGS

These and other objects, as well as advantageous features of the present invention will now be described more specifically by way of its preferred embodiments with reference to the accompanying drawings, wherein

Fig. 1 is a schematic system view showing an apparatus for producing a sterilized water according to the present invention,

Fig. 2 is a schematic constitutional view of a more preferred embodiment of an apparatus for producing a sterilized water according to the present invention;

Fig. 3 shows an apparatus of the prior art;

Fig. 4 is a graph illustrating a relation between the ratio of free chlorine concentration and pH; and

Figs. 5 - 6 are charts illustrating the results of continuous endurance test in a 5 l/min device.

## DESCRIPTION OF PREFERRED EMBODIMENTS OF THE INVENTION

Description will now be made more specifically to the operation of the present invention with reference to Fig. 1.

At first, an aqueous solution of sodium chlorine at a concentration, for example, of 5 to 10% is added from a storage vessel 10 by an addition pump 11 to an introduction pipe 5 for water to be electrolyzed to a predetermined concentration. An aqueous solution of hydrogen chloride is added from a storage vessel 28 by an addition pump 29 at a concentration, for example, of 10% to the introduction pipe 5 to a predetermined concentration. The concentration of the aqueous hydrogen chloride solution is properly selected depending on the pH value of the raw water and/or concentration of the aqueous sodium chloride solution.

Water to be electrolyzed is supplied by way of an introduction pipe 8 for water to be electrolyzed to an electrolytic cell 2 and then electrolyzed by the application of a DC voltage from a DC power source 17. Then, electrolyzed water is discharged from a processed water exit pipe 18. The volume of the water to be electrolyzed is controlled by a control valve 6, while the electrolyzing current is controlled by the DC power source 17. The DC power source 17 has a constant current controller so as to cope with the change of the electroconductivity or the like of the raw water and can maintain the electrolyzing current at a predetermined level.

The diluting raw water branched at the raw water branching portion 4 is supplied by way of a diluting raw water conduit 24, neither with addition of aqueous sodium chloride solution and aqueous hydrogen chloride nor passing through the electrolytic cell 2, and then mixed with a water at a high residual chlorine concentration formed in the electrolytic cell by a mixing/dilution portion 26 to diluted by the latter water.

The flowrate of the diluting raw water is controlled by a flowrate control valve 25 so that the sterilized water has a residual chlorine concentration and a pH value each in a predetermined range.

The pH value of the sterilized water is set to a predetermined level by adding an aqueous hydrogen chloride at a predetermined concentration by a HCl addition pump.

When the pH value in the sterilized water is to be controlled, the addition amount of hydrogen chloride is controlled by varying the stroke of the HCl addition pump.

As a result, a sterilized water having a residual chlorine concentration and a pH value each in a predetermined range, that is, at a residual chlorine concentration of 1.0 to 200 ppm and a pH value of 3 to 7 is produced and discharged from a sterilized water discharge pipe 27. In this case, the sterilizing effect is insufficient if the residual chlorine concentration is less than 1 ppm, whereas the surface of human skins will be oxidized if it exceeds 200 ppm.

Referring to the pH value, if it is higher than 7, $ClO^-$ is increased to reduce the sterilizing effect, whereas if it is lower than 3, presence of HClO becomes instable.

## Example

Description will now be made to an example of a sterilized water produced by the production apparatus according to the present invention having specifications as shown in Table 1.

Table 1

| | | |
|---|---|---|
| Type of electrolytic cell | | Single vessel flat plate |
| Anode material | | Titanium plate coated with platinum or iridium series material |
| Cathode material | | Titanium plate |
| Diaphragm | | None |
| Interelectrode distance | | 6 mm |
| Effective electrode area | | 1000 $cm^2$ |
| Electrolyzing current | | 0 - 15 A |
| NaCl addition concentration | | 1250 ppm |
| Volume of water to be electrolyzed | | 2 l/min |
| Raw water | Electroconductivity | 110 - 140 uS/cm |
| | pH | 7.0 - 7.6 |
| | Residual Cl concentration | 0.1 - 0.3 ppm |
| Measuring method for residual Cl concentration | | o-tolidine method |
| pH measuring method | | Portable type pH meter |
| HCl addition concentration | | 0 - 300 ppm |

An aqueous 5% sodium hydroxide solution was added to a raw water having an electroconductivity of 139 uS/cm, pH at 7.4 and with a residual chlorine concentration of 0.1 ppm, at a rate of 50 cc/min to 2 litre/min of water to be electrolyzed to adjust the sodium chloride concentration at 1250 ppm.

Then, an aqueous 1% HCl concentration was added, at a rate of 17 cc/min to 1 litre/min of water to be electrolyzed.

The electroconductivity of the water to be electrolyzed was thus increased to about 2800 uS/cm.

When the water to be electrolyzed was electrolyzed at an electrolyzing voltage of 12V and an electrolyzing current of 12A, the processed (electrolyzed) water had a pH value of 5.0 and a residual chlorine concentration of 160 ppm.

When 4 litre of the raw water was mixed as a diluting water to 2 litre of the processed water formed on the side of the anode, 5 litre of sterilized water at pH 6 and with residual chlorine concentration of 30 ppm was obtained.

In this case, the electrolyzing voltage shows no substantial change with lapse of time as shown in Fig 6.

Fig. 2 illustrates another embodiment of an apparatus for practicing the method of producing a sterilized water according to the present invention.

The apparatus has a diaphragmless electrolytic cell 2 comprising a cylindrical outer electrode 13 and an inner electrode 14 disposed coaxially. An introduction pipe 8 for water to be electrolyzed is connected to a water supply port 2a of the electrolytic cell 2, and a raw water from a raw water introduction pipe 3, an aqueous sodium chloride solution from a vessel 10 and a aqueous hydrogen chloride solution from a vessel 28 are joined in this introduction pipe 8 in the same manner as shown in Fig. 1.

A hollow water pass block 30 is integrally joined as a mixing portion with a diluting raw water to the side of the electrolytic cell 2 for discharging the electrolyzed water and a diluting raw water conduit 24 branched from a raw water introduction pipe 3 is connected with one end of the water pass block 30.

The water pass block 30 is in adjacent with the electrolytic cell 2 by way of a partition wall 31, and an electrode rod 13a of the inner electrode 13 traverses the inner water passing channel 32 of the water pass block 30 and protrudes above the water pass block 30.

Further, the inner water passing channel 32 of the water pass block 30 is in communication with the inside of the electrolytic cell 2 by way of a small aperture or orifice 33 formed through the partition wall 31.

In this way, a sterilized water at a high concentration formed in the electrolytic cell 2 is discharged through the orifice 33 into the water passing channel 32 of the water pass block 30, while the raw water is supplied from the diluting raw water conduit 24 to the water passing channel 32 of the water pass block 30, by which the electrolyzed water and the raw water are mixed in the water passing channel 32 of the water pass block 30 to dilute the electrolyzed water at a high concentration to a desired concentration.

As has been described above, in the embodiment illustrated in Fig. 2, since the water pass block 30 for mixing and dilution is integrally joined with the electrolytic cell 2, there is no requirement for disposing an additional junction with the diluting raw water conduit 24 to the exit pipe 18 for the electrolyzed water. Further, since the water pass block 30 is connected by way of the partition wall 31 to the electrolytic cell 2, the electrode rod 13a of the inner electrode 13 is cooled by the introduction of the diluting raw water to suppress the temperature elevation in the upper portion of the electrolytic cell 2.

That is, if the temperature for the diluting raw water and the electrolyzed water is high, turbulence is caused in the junction tending to hinder the mixing, but the problem can be overcome by the foregoing cooling.

For mixing the electrolyzed water and the diluting raw water more smoothly, the thickness for the portion of the partition wall 31 in which the orifice 33 is formed is preferably increased as shown in Fig. 2, so that a long orifice may be formed. Further, for easy discharge of the electrolyzed water, the orifice 33 is preferably opened to a downstream of the electrode rod 13a that transverses the water pass block 30, so that it less undergoes the pressure of the diluting water.

Further, various kinds of aspirators (not illustrated in the drawing) may be disposed, if necessary, to the water passing channel 32 of the water pass block 30.

In the embodiment shown in Fig. 2, a gas/liquid reaction vessel 34 is disposed to the downstream exit pipe 18 of the water passing block 30.

The gas/liquid reaction vessel 34 illustrated in the drawing has one or plurality of treating layers comprising non-woven fabrics 35 filled between partition plates each formed with small water passing apertures, so that gaseous chlorine is brought into reaction with water during passage of the diluted sterilized water passes through the treating layers.

As described above, since the gas/liquid reaction vessel 34 is disposed to the exit pipe 18, even if gaseous chlorine $Cl_2$ is present in the electrolyzed water, it is reacted with water ($H_2O$) as:

$$Cl_2 + H_2O \rightarrow H(ion) + Cl\ (ion) + HClO,$$

to eliminate noxious $Cl_2$ and increase HClO of strong sterilizing effect.

In a case where the inner electrode is disposed coaxially with the cylindrical outer electrode, it is preferred to use the outer electrode as the anode. This makes the effective electrolysis area for the anode greater to improve the electrolyzing efficiency.

In Fig. 2, there are also shown a flow switch 36 that detects the flow of water and controls the application of an electrolyzing voltage to the electrodes of the electrolytic cell 2 to turn ON and OFF by the detection signal, flow meters 37 and 38 and a microfilter 39.

Although the vessel 10 for the aqueous NaCl solution and the vessel 28 for the aqueous HCl solution are disposed separately in the drawing, a mixture of an aqueous NaCl solution at a predetermined concentration and an aqueous HCl solution at a predetermined concentration previously mixed at a predetermined ratio may be supplied from one vessel.

According to the present invention, since an aqueous sodium chloride solution and an aqueous hydrogen chloride are electrolyzed without using a diaphragm, to form a processed water at a high residual chlorine concentration in the electrolytic cell and it is further mixed and diluted with a diluting raw water, a sterilized water of a residual concentration and a pH value each controlled to a predetermined range can be produced continuously. Since it can be used at a pH range of 4 to 6 in which hypochlorous acid of strong sterilizing effect is present at a high ratio, a sterilizing effect comparable with that in the prior art can be provided even at a residual chlorine concentration which is lower than that in a usual diluted aqueous solution of hypochlorous acid. Further, since hydrogen chloride is added to the electrolytic cell, calcium is not deposited on the cathode to save the maintenance operation for electrodes and water is not discharged wastefully.

Furthermore, since the sterilized water can be produced by a simple operation, it is excellent in view of the safety and the operability and, in addition, it is excellent also from a view point that the sterilized water can be supplied continuously by a required amount to a place where it is used. Accordingly, it is possible to provide, at a reduced cost, a sterilized water used for the sanitation of cookeries, hand washing, food materials and wet hand towels, as well as a sterilized water applicable to a wide range of fields, for example, food processing and distribution, drinking water, pool water, and medical application use.

## Claims

**1.** A method of producing a sterilized water which comprises mixing s sodium chloride-added water and a hydrogen chloride-added water, electrolyzing them in an electrolytic cell not having a diaphragm and diluting the resultant electrolyzed water with water.

**2.** A method of producing a sterilized water as defined in claim 1, wherein the residual chlorine concentration in the processed sterilized water is controlled to a range from 1.0 to 200 ppm.

**3.** A method of producing a sterilized water as defined in claim 1 or 2, wherein the pH value in the processed sterilized water is controlled to about 3 to 7.

**4.** A method of producing a sterilized water as defined in claims 1, 2 or 3, wherein an aqueous solution of sodium chloride solution at a predetermined concentration and an aqueous solution of hydrogen chloride at a predetermined concentration is mixed by a predetermined ratio and mixing the thus mixed aqueous solution with a raw water.

**5.** An apparatus for producing a sterilized water comprising:

an electrolytic cell not having an electrolytic diaphragm between an anode and a cathode;

on introduction pipe connected to one side of said electrolytic cell for supplying a raw water, an aqueous solution of sodium chloride supplied from an aqueous sodium chloride addition means and an aqueous hydrogen chloride solution supplied from an aqueous hydrogen chloride addition means to said electrolytic cell;

an exit pipe disposed on the other side of the electrolytic cell for recovering an electrolyzed water from the electrolytic cell; and

a diluting means for mixing the electrolyzed water discharged from said electrolytic cell and the raw water from a diluting raw water conduit branched from the raw water introduction pipe.

**6.** An apparatus for producing a sterilized water as defined in claim 5, wherein the exit pipe has a hollow water pass block joined integrally to said electrolytic cell and in communication with the inside of said electrolytic cell by way of an orifice, the diluting raw water conduit branched from the raw water introduction pipe is connected to the inner channel of said water pass block, so that the electrolyzed water and the diluting raw water are mixed in the inner water passing channel of said water pass block.

**7.** An apparatus for producing a sterilized water as defined in claim 6. wherein an aspirator is disposed to the upstream for the opening of the orifice in the water pass channel of said water pass block.

**8.** An apparatus for producing a sterilized water as defined in claim 6 or 7, wherein the exit pipe has a gas-/liquid reaction vessel to the downstream of the water pass block.

**9.** An apparatus for producing a sterilized water as defined in claim 8, wherein the gas/liquid reaction vessel has one or plurality of processing layers filled with nonwoven fabrics.

**10.** An apparatus for producing a sterilized water as defined in any one of claims 5 to 9, wherein the electrolytic cell comprises an inner electrode and an outer electrode disposed coaxially, in which the outer electrode is used as the anode, while the inner electrode is used as the cathode.

FIG. 1

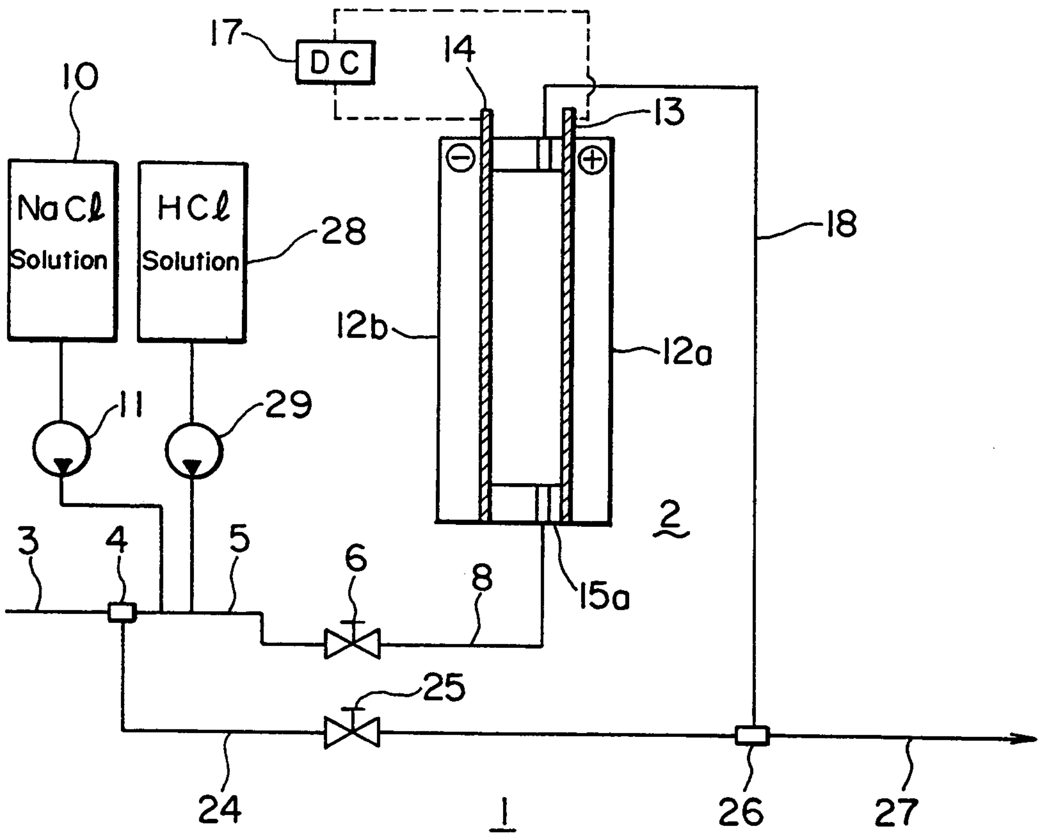
17
DC
14
13
10
NaCl Solution
HCl Solution
28
18
12b
12a
11
29
2
3
4
5
6
8
15a
25
24
1
26
27

FIG.2

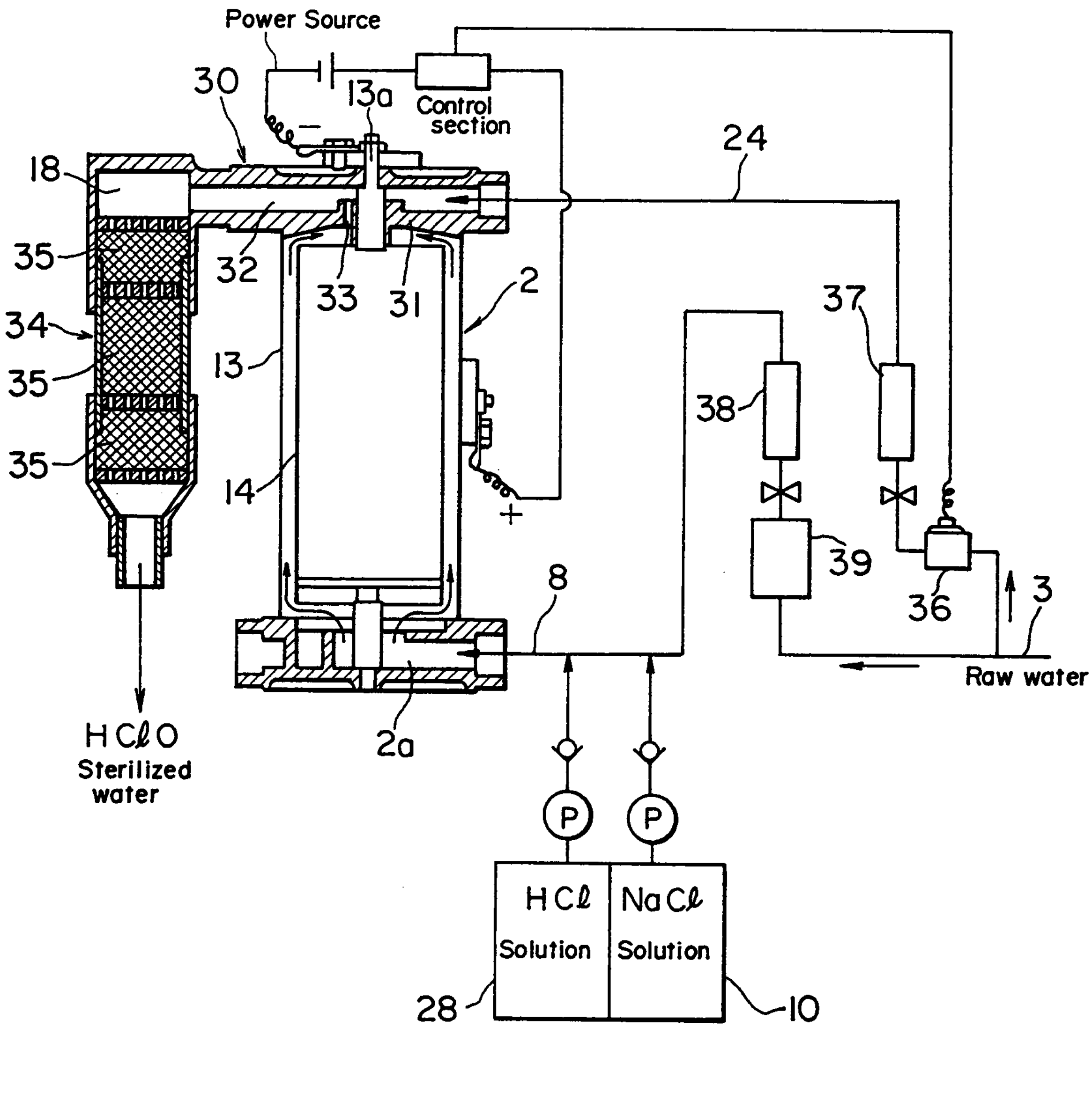
Power Source
30
13a
Control section
18
24
35
32
33
31
2
34
37
35
13
38
35
14
+
39
8
36
3
Raw water
2a
HCℓO
Sterilized water
P
P
HCℓ Solution
NaCℓ Solution
28
10

FIG. 3

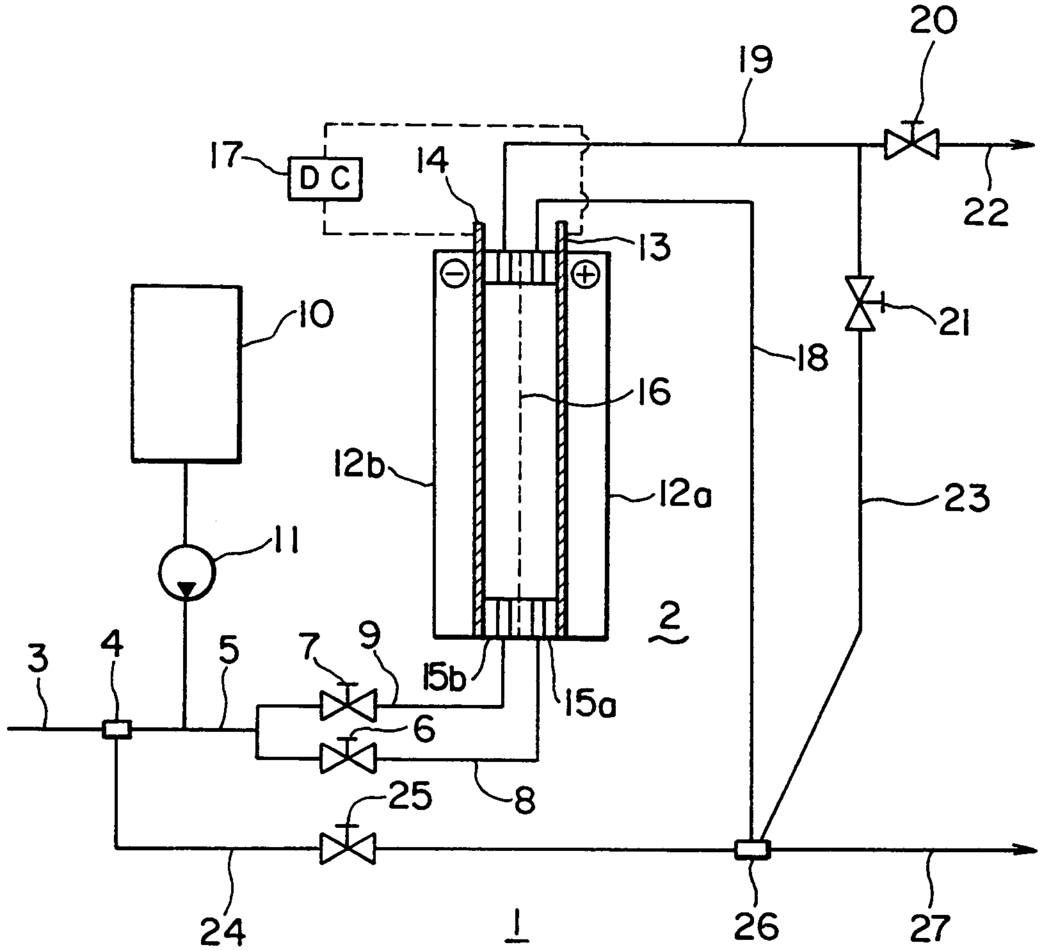
20
19
17
D C
14
22
13
10
21
18
16
12b
12a
23
11
2
3
4
5
7
9
15b
15a
6
25
8
24
1
26
27

FIG. 4

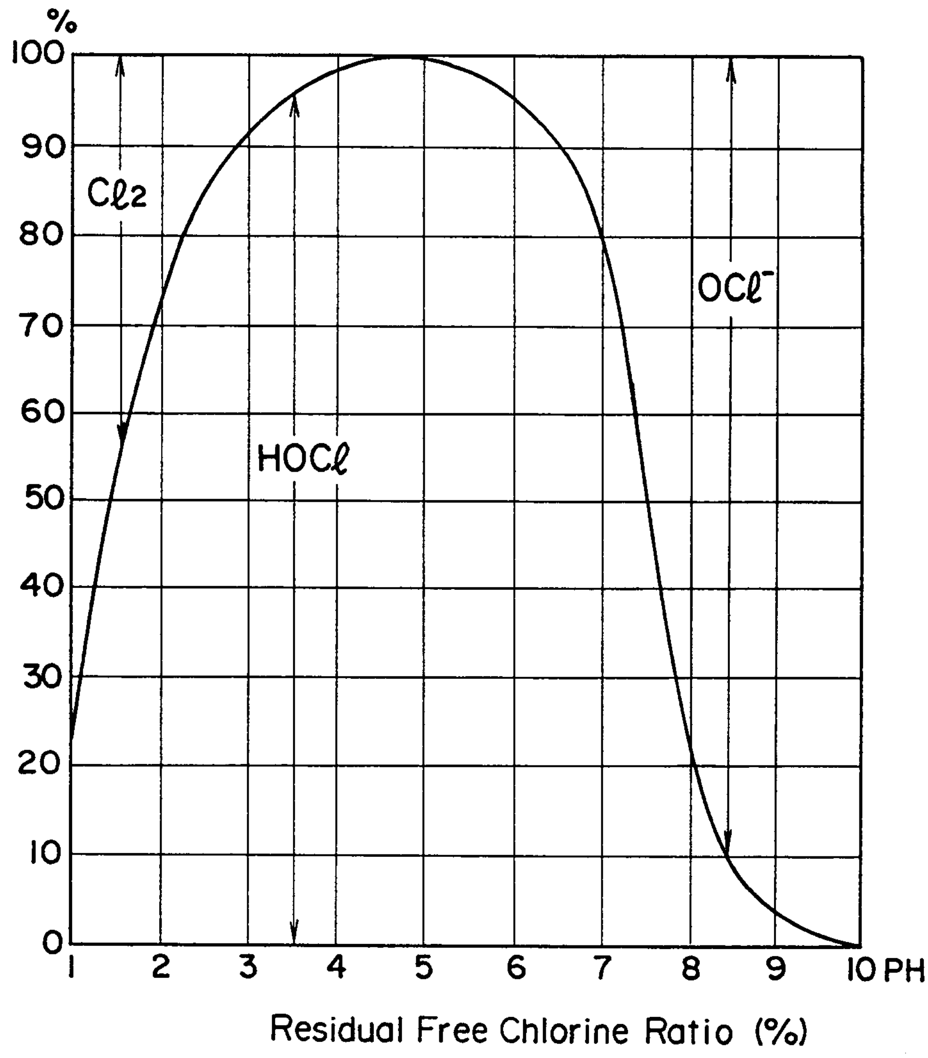
%
100
90
80
70
60
50
40
30
20
10
0
1
2
3
4
5
6
7
8
9
10 PH
$Cl_2$
HOCl
$OCl^-$
Residual Free Chlorine Ratio (%)

FIG. 5

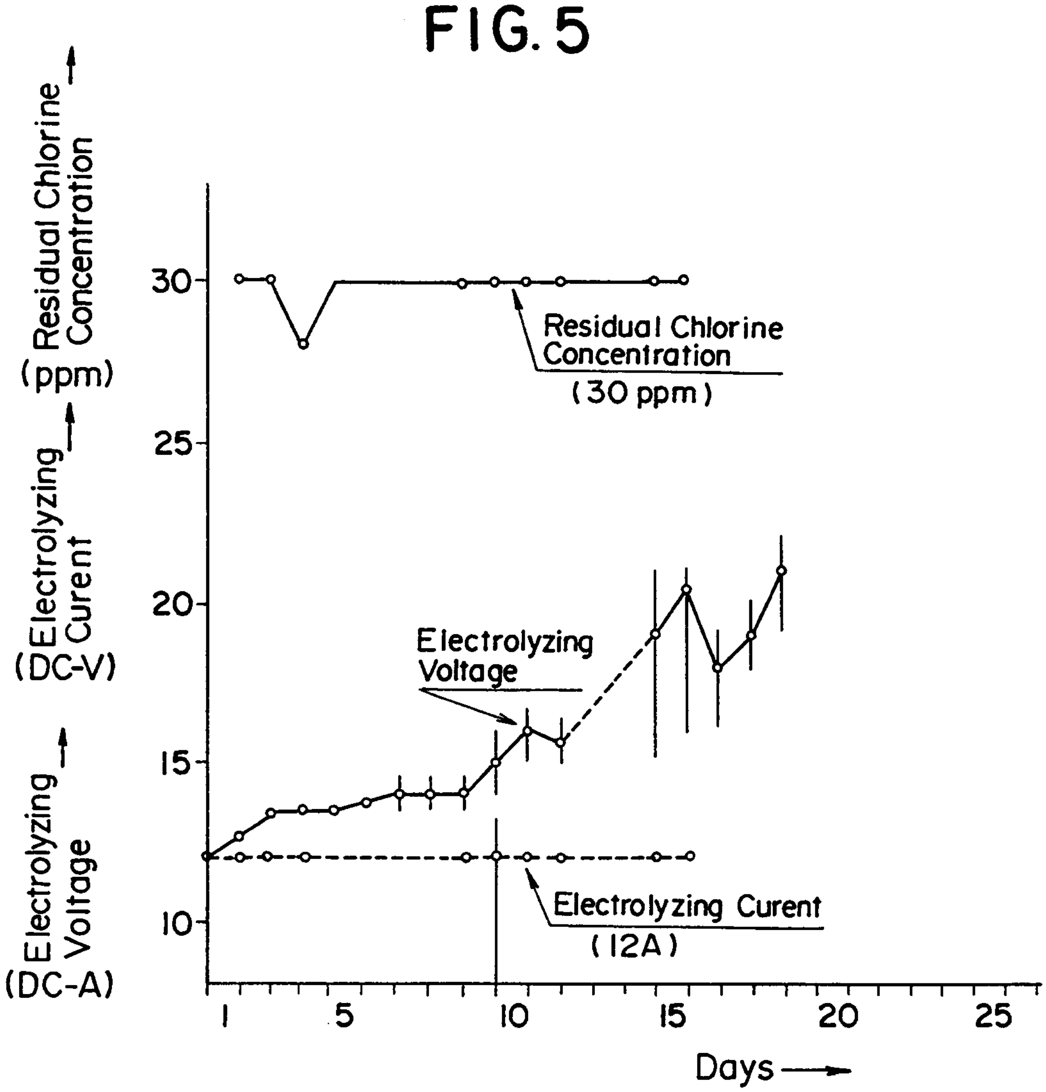
Residual Chlorine Concentration (ppm)
Electrolyzing Curent (DC-V)
Electrolyzing Voltage (DC-A)
30
25
20
15
10
Residual Chlorine Concentration
(30 ppm)
Electrolyzing Voltage
Electrolyzing Curent
(12A)
1
5
10
15
20
25
Days

FIG. 6

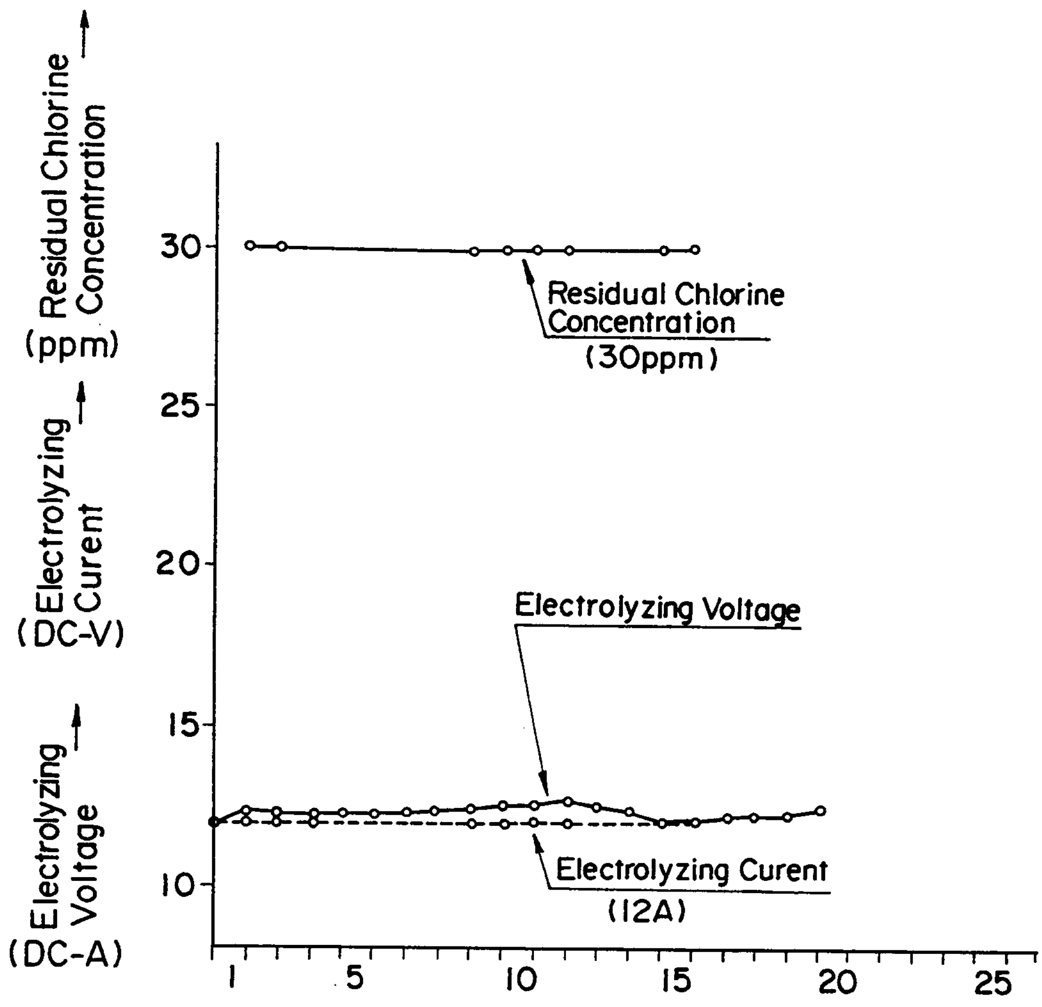
Residual Chlorine Concentration
(ppm)
Electrolyzing Curent
(DC-V)
Electrolyzing Voltage
(DC-A)
30
25
20
15
10
1
5
10
15
20
25
Residual Chlorine Concentration
(30ppm)
Electrolyzing Voltage
Electrolyzing Curent
(12A)